# EUROPEAN PATENT SPECIFICATION

(11) **EP 2 013 733 B1**
(45) Date of publication and mention of the grant of the patent: **22.02.2012**
(21) Application number: 07716774.0
(22) Date of filing: 19.01.2007
(51) Int. Cl.: G06F 11/18, G06F 11/07

(54) **ERROR FILTERING IN FAULT TOLERANT COMPUTING SYSTEMS**
FEHLERFILTERUNG IN FEHLERTOLERANTEN DATENVERARBEITUNGSSYSTEMEN
FILTRAGE DES ERREURS DANS DES SYSTÈMES INFORMATIQUES INSENSIBLES AUX DÉFAILLANCES

(30) Priority: 21.04.2006 US 379633
(43) Date of publication of application: 14.01.2009
(73) Proprietor: Honeywell International Inc., Morristown, NJ 07962 (US)
(72) Inventor: KAMMANN, Paul D., Plymouth, MN 55446 (US); PARMET, Darryl I., Tampa, FL 33634 (US); SMITH, Grant L., Tampa, FL 33634 (US)
(74) Representative: Buckley, Guy Julian
(86) International application number: PCT/US2007/001351
(87) International publication number: WO 2007/133300

(56) References cited:
- US-A- 5 655 069
- US-A- 6 104 211
- US-A1- 2004 078 653
- US-A1- 2005 278 567
- US-B1- 6 178 522

## Description

### BACKGROUND

Present and future high-reliability (i.e., space) missions require significant increases in on-board signal processing. Presently, generated data is not transmitted via downlink channels in a reasonable time. As users of the generated data demand faster access, increasingly more data reduction or feature extraction processing is performed directly on the high-reliability vehicle (e.g., spacecraft) involved. Increasing processing power on the high-reliability vehicle provides an opportunity to narrow the bandwidth for the generated data and/or increase the number of independent user channels.

In signal processing applications, traditional instruction-based processor approaches are unable to compete with million-gate, field-programmable gate array (FPGA)-based processing solutions. Systems with multiple FPGA-based processors are required to meet computing needs for Space Based Radar (SBR), next-generation adaptive beam forming, and adaptive modulation space-based communication programs. As the name implies, an FPGA-based system is easily reconfigured to meet new requirements. FPGA-based reconfigurable processing architectures are also re-useable and able to support multiple space programs with relatively simple changes to their unique data interfaces.

Reconfigurable processing solutions come at an economic cost. For instance, existing commercial-off-the-shelf (COTS), synchronous read-only memory (SRAM)-based FPGAs show sensitivity to radiation-induced upsets. Consequently, a traditional COTS-based reconfigurable system approach is unreliable for operating in high-radiation environments. Typically, multiple FPGAs are used in tandem and their outputs are compared via an external triple modular redundant (TMR) voter circuit. The TMR voter circuit identifies if an FPGA has been subjected to a single event upset (SEU) error. Each time an SEU error event is detected, the FPGA is normally taken offline and reconfigured.

Typically, it requires multiple SEU errors to significantly upset the on-board signal processing (e.g., to cause the FPGA to latch or change state resulting in a hard failure). A single event transient (SET) error is an SEU event that does not get latched, causing a transient effect. A single transient effect will only impede normal operation of the FPGA for a short duration, and an automatic reconfiguration of the FPGA is often unnecessary. Any unnecessary reconfigurations will lead to increased signal processing delays.

US Patent Specification No 6104211 discloses a system for radiation-tolerating a single event fault in an electronic circuit, but a reconfiguration from configuration memory may result in a loss of user data.

US Patent Specification 5655069 is a fault-tolerant information processing system has a main processor for managing the overall system.

US Patent Specification 6178522 describes a system for managing redundant computers with fault tolerance by masking erroneous data and excluding faulty nodes.

US Patent Specification 2004/0078653 discloses a voting system having error counters implementing an error filter.

### SUMMARY

The present invention provides a system as defined in Claim 1.

The system may provide the features of any one or more of dependent claims 2 to 5.

Embodiments of the present invention address problems with monitoring single event fault tolerance in an electronic circuit and will be understood by reading and studying the following specification. Particularly, in one embodiment, a system for tolerating a single event fault in an electronic circuit is provided. The system includes a main processor, a fault detection processor responsive to the main processor, the fault detection processor further comprising a voter logic circuit, three or more logic devices responsive to the fault detection processor, each output of the three or more logic devices passing through the voter logic circuit, and a programmable error filter. An output of the voter logic circuit is coupled to the programmable error filter.

### DRAWINGS

FIG. 1 is a block diagram of an embodiment of a fault tolerant computing system according to the teachings of the present invention;
FIG. 2 is a block diagram of an embodiment of a circuit for detecting single event fault conditions according to the teachings of the present invention;
FIG. 3 is a block diagram of an embodiment of a programmable logic interface for detecting single event fault conditions with a programmable error filter according to the teachings of the present invention; and
FIG. 4 is a flow diagram illustrating an embodiment of a method for tolerating a single event fault in an electronic circuit according to the teachings of the present invention.

Like reference numbers and designations in the various drawings indicate like elements.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized. The following detailed description is, therefore, not to be taken in a limiting sense.

Embodiments of the present invention address problems with monitoring single event fault tolerance in an electronic circuit and will be understood by reading and studying the following specification. Particularly, in one embodiment, a system for tolerating a single event fault in an electronic circuit is provided. The system includes a main processor, a fault detection processor responsive to the main processor, the fault detection processor further comprising a voter logic circuit, three or more logic devices responsive to the fault detection processor, each output of the three or more logic devices passing through the voter logic circuit, and a programmable error filter. An output of the voter logic circuit is coupled to the programmable error filter.

Although the examples of embodiments in this specification are described in terms of determining single event fault tolerance for high-reliability applications, embodiments of the present invention are not limited to determining single event fault tolerance for high-reliability applications. Embodiments of the present invention are applicable to any fault tolerance determination activity in electronic circuits that requires a high level of reliability. Alternate embodiments of the present invention utilize external triple modular component redundancy (TMR) with three or more logic devices operated synchronously with one another. The output of a TMR voter circuit is applied to a programmable error filter. The programmable error filter flags an error only if an error count has exceeded a programmable error threshold, allowing periodic single event transient (SET) errors to pass through.

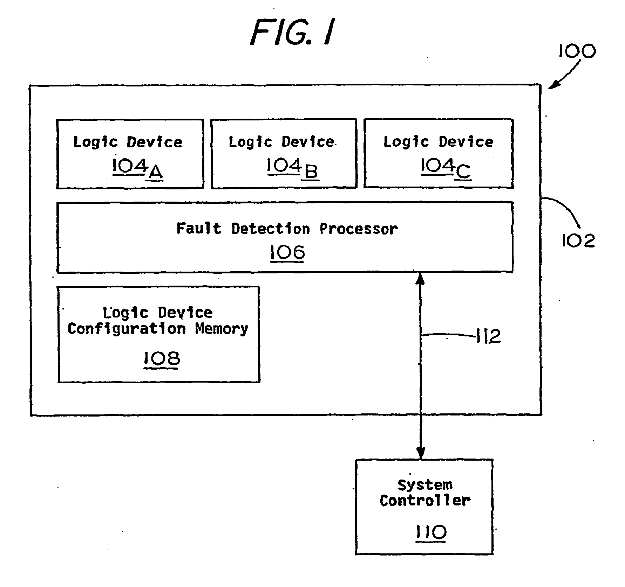

Figure 1 is a block diagram of an embodiment of a fault tolerant computing system, indicated generally at 100, according to the teachings of the present invention. An exemplary embodiment of system 100 is described in the '290 Application. System 100 includes fault detection processor assembly 102 and system controller 110. System controller 110 is a microcontroller, a programmable logic device, or the like. Fault detection processor assembly 102 also includes logic devices 104_{A} to 104_{C}, fault detection processor 106, and logic device configuration memory 108, each of which are discussed below. It is noted that for simplicity in description, a total of three logic devices 104_{A} to 104_{C} are shown in Figure 1. However, it is understood that fault detection processor assembly 102 supports any appropriate number of logic devices 104 (e.g., three or more logic devices) in a single fault detection processor assembly 102.

Fault detection processor 106 is any logic device (e.g., an ASIC), with a configuration manager, the ability to host TMR voter logic with a programmable error filter, and an interface to provide at least one output to a distributed processing application system controller, similar to system controller 110. TMR requires each of logic devices 104_{A} to 104_{C} to operate synchronously with respect to one another. Control and data signals from each of logic devices 104_{A} to 104_{C} are voted against each other in fault detection processor 106 to determine the legitimacy of the control and data signals. Each of logic devices 104_{A} to 104_{C} are programmable logic devices such as a field-programmable gate array (FPGA), a complex programmable logic device (CPLD), a field-programmable object array (FPOA), or the like.

System 100 forms part of a larger distributed processing application (not shown) using multiple processor assemblies similar to fault detection processor assembly 102. Fault detection processor assembly 102 and system controller 110 are coupled for data communications via distributed processing application interface 112. Distributed processing application interface 112 is a high speed, low power data transmission interface such as Low Voltage Differential Signaling (LVDS), a high-speed serial interface, or the like. Also, distributed processing application interface 112 transfers at least one set of default configuration software machine-coded instructions for each of logic devices 104_{A} to 104_{C} from system controller 110 to fault detection processor 106 for storage in logic device configuration memory 108. Logic device configuration memory 108 is a double-data rate synchronous dynamic read-only memory (DDR SDRAM) or the like.

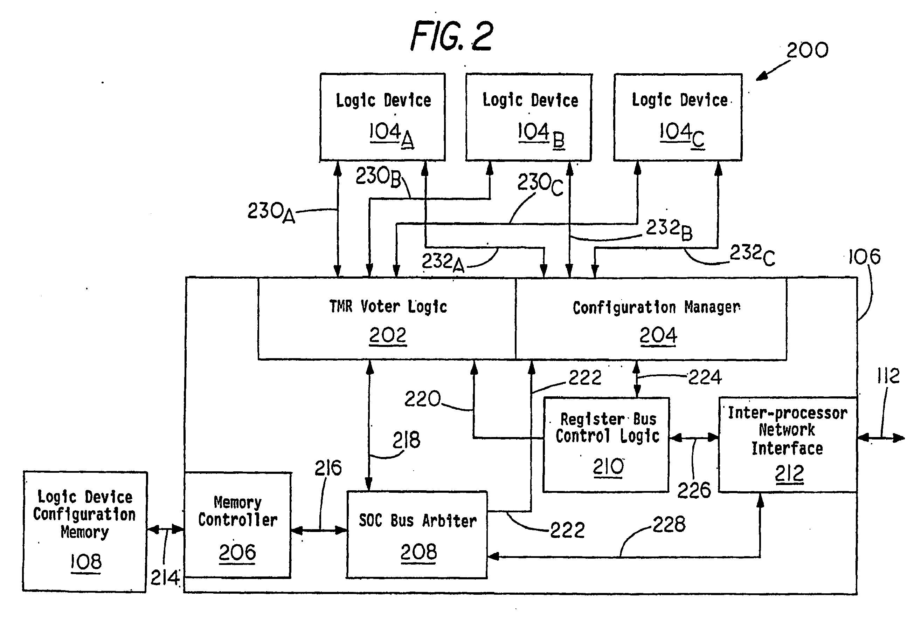

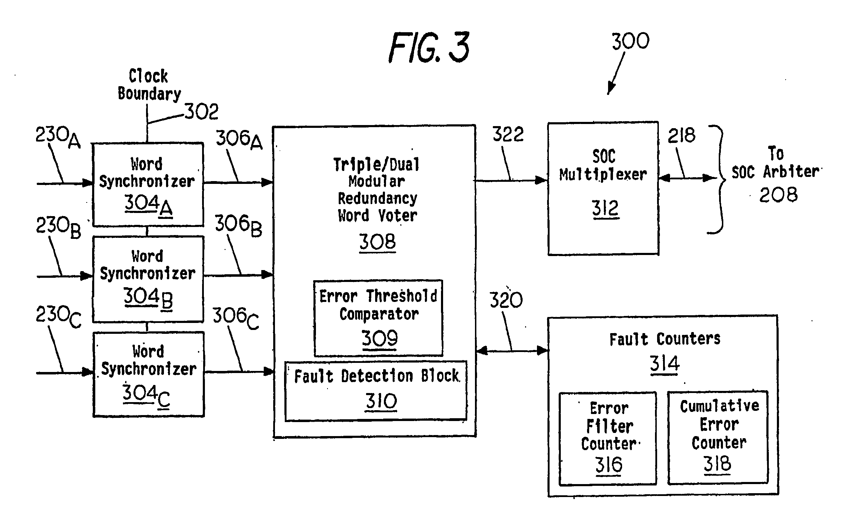

In operation, logic device configuration memory 108 is loaded during initialization with the at least one set of default configuration software machine-coded instructions. Fault detection processor 106 continuously monitors each of logic devices 104_{A} to 104_{C} for one or more single event fault conditions. The monitoring of one or more single event fault conditions is accomplished by TMR voter logic 202. In one implementation, TMR voter logic 202 filters each single event fault condition. When one or more filtered single event fault conditions exceeds a programmable SET error threshold, system controller 110 automatically coordinates a backup of state information currently residing in the faulted logic device and begins a reconfiguration sequence. The reconfiguration sequence is described in further detail below with respect to Figures 2 and 3. Once the faulted logic device is reconfigured, or all three of logic devices 104_{A} to 104_{C} are reconfigured, system controller 110 interrupts the operation of all three logic devices 104_{A} to 104_{C} to bring each of logic devices 104₁ to 104₃ back into synchronous operation.

Figure 2 is a block diagram of an embodiment of a circuit, indicated generally at 200, for detecting single event fault conditions according to the teachings of the present invention. An exemplary embodiment of circuit 200 is described in the '290 Application. Circuit 200 includes fault detection processor 106 of Figure 1 (e.g., a radiation-hardened ASIC). Fault detection processor 106 includes TMR voter logic 202, configuration manager 204, memory controller 206, system-on-chip (SOC) bus arbiter 208, register bus control logic 210, and inter-processor network interface 212, each of which are discussed below. Circuit 200 also includes logic devices 104_{A} to 104_{C}, each of which is coupled for data communications to fault detection processor 106 by device interface paths 230_{A} to 230_{C}, respectively. Each of device interface paths 230_{A} to 230_{C}, are composed of a high-speed, full duplex communication interface for linking each of logic devices 104_{A} to 104_{C} with TMR voter logic 202. Each of logic devices 104_{A} to 104_{C} is further coupled to fault detection processor 106 by configuration interface paths 232_{A} to 232_{C}, respectively. Each of configuration interface paths 232_{A} to 232_{C} is composed of a full duplex communication interface used for configuring each of logic devices 104_{A} to 104_{C} by configuration manager 204. It is noted that for simplicity in description, a total of three logic devices 104_{A} to 104_{C}, three device interface paths 230_{A} to 230_{C}, and three configuration interface paths 232_{A} to 232_{C} are shown in Figure 2. However, it is understood that circuit 200 supports any appropriate number of logic devices 104 (e.g., three or more logic devices), device interface paths (e.g., three or more device interface paths), and configuration interface paths (e.g., three or more configuration interface paths) in a single circuit 200.

TMR voter logic 202 and configuration manager 204 are coupled for data communications to register bus control logic 210 by voter logic interface 220 and configuration manager interface 224. Voter logic interface 220 and configuration manager interface 224 are bi-directional communication links used by fault detection processor 106 to transfer commands between control registers within TMR voter logic 202 and configuration manager 204. Register bus control logic 210 provides system controller 110 of Figure 1 access to one or more control and status registers inside configuration manager 204. Register bus 226 provides a bi-directional, inter-processor communication interface between register bus control logic 210 and inter-processor network interface 212. Inter-processor network interface 212 connects fault detection processor 106 to system controller 110 via distributed processing application interface 112. Inter-processor network interface 212 provides an error signal on distributed processing application interface 112. The error signal indicates to system controller 110 that one or more filtered single event faults have exceeded a programmable error threshold. In this example embodiment, the error signal is provided by error threshold comparator 309 as discussed in detail below with respect to Figure 3. As discussed above with respect to Figure 1, distributed processing application interface 112 transfers at least one set of default configuration software machine-coded instructions to fault detection processor 106 for storage in logic device configuration memory 108. Logic device configuration memory 108 is accessed by memory controller 206 via device memory interface 214. Device memory interface 214 provides a high-speed, bi-directional communication link between memory controller 206 and logic device configuration memory 108.

Memory controller 206 receives the at least one set of default programmable logic for storing in logic device configuration memory 108 via bus arbiter interface 228, SOC bus arbiter 208, and memory controller interface 216. Bus arbiter interface 228 provides a bi-directional, inter-processor communication interface between SOC bus arbiter 208 and inter-processor network interface 212. SOC bus arbiter 208 transfers memory data from and to memory controller 206 via memory controller interface 216. Memory controller interface 216 provides a bi-directional, inter-processor communication interface between memory controller 206 and SOC bus arbiter 208. The set of default configuration software machine-coded instructions discussed above with respect to logic device configuration memory 108 is used to reconfigure each of logic devices 104₁ to 104₃. SOC bus arbiter 208 provides access to memory controller 206 based on instructions received from TMR voter logic 202 on voter logic interface 218. Voter logic interface 218 provides a bi-directional, inter-processor communication interface between TMR voter logic 202 and SOC bus arbiter 208. SOC bus arbiter 208 is further communicatively coupled to configuration manager 204 via configuration interface 222. Configuration interface 222 provides a bi-directional, inter-processor communication interface between configuration manager 204 and SOC bus arbiter 208. The primary function of SOC bus arbiter 208 is to provide equal access to memory controller 206 and logic device configuration memory 108 between TMR voter logic 202 and configuration manager 204.

In operation, configuration manager 204 performs several functions with minimal interaction from system controller 110 of Figure 1 after an initialization period. System controller 110 also programs one or more registers in configuration manager 204 with a location and size of the set of default configuration software machine-coded instructions discussed earlier. Following initialization, configuration manager 204 is commanded to either simultaneously configure all three logic devices 104_{A} to 104_{C} in parallel or to individually configure a single logic device from one of logic devices 104_{Z} to 104_{C} based on results provided by TMR voter logic 202. When TMR voter logic 202 detects that one or more single event faults have exceeded the programmable error threshold, TMR voter logic 202 generates a TMR fault pulse. When the TMR fault pulse is detected by configuration manager 204, configuration manager 204 automatically initiates a sequence of commands to the one of logic devices 104_{A} to 104_{C} that has been determined to be at fault by TMR voter logic 202. For instance, if logic device 104_{B} is identified to be suspect, configuration manager 204 instructs logic device 104_{B} to abort. The abort instruction clears any errors that have been caused by one or more single event faults, such as an SEU or an SEFI. Configuration manager 204 issues a reset command to logic device 104_{B}, which halts operation of logic device 104_{B}. Next, configuration manager 204 issues an erase command to logic device 104_{B}, which clears all memory registers residing in logic device 104_{B}. Once logic device 104_{B} has cleared all the memory registers, logic device 104_{B}, in turn, responds back to configuration manager 204. Configuration manager 204 transfers the set of default configuration software machine-coded instructions for logic device 104_{B} from a programmable start address in logic device configuration memory 108 to logic device 104_{B}. Once the transfer is completed, configuration manager 204 notifies system controller 110 that a synchronization cycle must be performed to bring each of logic devices 104_{A} to 104_{C} back into synchronization. Only the one of logic devices 104_{A} to 104_{C} that has been determined to be at fault requires reconfiguration, minimizing system restart time.

Figure 3 is a block diagram of an embodiment of a programmable logic interface, indicated generally at 300, for detecting single event fault conditions according to the teachings of the present invention. Logic interface 300 includes word synchronizers 304_{A} to 304_{C}, triple/dual modular redundancy (TMR/DMR) word voter 308, SOC multiplexer 312, and fault counters 314, each of which are discussed below. Logic interface 300 is composed of an input section of TMR voter logic 202 as described above with respect to Figure 2. It is noted that for simplicity in description, a total of three word synchronizers 304_{A} to 304_{C} are shown in Figure 3. However, it is understood that logic interface 300 supports any appropriate number of word synchronizers 304 (e.g., three or more word synchronizers) in a single logic interface 300.

Each of word synchronizers 304_{A} to 304_{C} receive one or more original input signals from each of device interface paths 230_{A} to 230_{C}, respectively, as described above with respect to Figure 2. Each of the one or more original inputs signals includes a clock signal in addition to input data and control signals from each of logic devices 104_{A} to 104_{C} of Figure 2. Sending a clock signal relieves routing constraints and signal skew concerns typical of a high speed interface similar to that of device interface paths 230_{A} to 230_{C}. Each of word synchronizers 304_{A} to 304_{C} is provided the clock signal to sample the input data and control signals. The data and control signals are passed through a circular buffer inside a front end of each of word synchronizers 304_{A} to 304_{C} that aligns the input data and control signals on a word boundary with the frame signal. A word boundary is 20 bits wide (e.g., 16 bits of data plus 3 control signals and a clock signal), and 19 bits wide at each of synchronizer output lines 306_{A} to 306_{C}. Each of device interface paths 230_{A} to 230_{C} is routed with equal length to support voting on a clock cycle by clock cycle basis. After word alignment, aligned input data and control signals are transferred across clock boundary 302 and onto each of synchronizer output lines 306_{A} to 306_{C}. Each of synchronizer output lines 306_{A} to 306_{C} transfer synchronized outputs into a clock domain of fault detection processor 106 of Figure 1. Each of synchronizer output lines 306_{A} to 306_{C} is coupled for data communication to TMR/DMR word voter 308. It is noted that for simplicity in description, a total of three synchronizer output lines 306_{A} to 306_{C} are shown in Figure 3. However, it is understood that logic interface 300 supports any appropriate number of synchronizer output lines 306 (e.g., three or more synchronizer output lines) in a single logic interface 300.

The synchronized outputs from logic devices 104_{A} to 104_{C} are transferred into TMR/DMR word voter 308. TMR/DMR word voter 308 further comprises error threshold comparator 309 and fault detection block 310. TMR/DMR word voter 308 incorporates combinational logic to compare each synchronized output from one of logic devices 104_{A} to 104_{C} against corresponding synchronized outputs from a remaining two of logic devices 104_{A} to 104_{C} once every clock cycle. Error threshold comparator 309 is programmed with a programmable error threshold value. Fault detection block 310 determines which of logic devices 104_{A} to 104_{C} is miscomparing (i.e., disagreeing). A logic device 104 that disagrees is considered a suspect device. An output pattern from fault detection block 310 contains three signals of all 1's if each of logic devices 104_{A} to 104_{C} is in agreement. If one of logic devices 104_{A} to 104_{C} miscompares, two signals within the output pattern will be logic zero. The two signals that agree (i.e., are each zero) cause a remaining signal to remain a logic one. The remaining signal indicates which one of logic devices 104_{A} to 104_{C} is the suspect device.

Once a suspect device is detected, fault counters 314 are updated by fault counter interface 320. In this example embodiment, fault counters 314 include error filter counter 316 and cumulative error counter 318. TMR/DMR word voter 308 increments error filter counter 316 by one for every miscompare, and decrements error filter counter 316 by one for every set of synchronized outputs from logic devices 104_{A} to 104_{C} that TMR/DMR word voter 308 determines to be in agreement. In this example embodiment, error filter counter 316 and error threshold comparator 309 represent a programmable error filter. Once error filter counter 316 is updated, fault counters 314 issues an updated error filter counter value to error threshold comparator 309. When error threshold comparator 309 determines the updated error filter counter value of error filter counter 316 violates (i.e., exceeds) the programmable error threshold value, the suspect device will be automatically reconfigured. The two remaining logic devices of logic devices 104_{A} to 104_{C} continue to operate in a self-checking pair (SCP) or DMR mode. As described in the '290 Application, any first miscompare between the two remaining logic devices of logic devices 104_{A} to 104_{C} in SCP mode signals a fatal error to system controller 110, and system controller 110 begins a complete recovery sequence on all three of logic devices 104_{A} to 104_{C}.

Reconfiguration of any of the affected logic device devices 104_{A} to 104_{C} is handled automatically by configuration manager 204 as described with respect to Figure 2 above. TMR/DMR word voter 308 indicates to SOC multiplexer 312 via TMR/DMR voter output interface 322 which of logic devices 104_{A} to 104_{C} has been substantially modified by one or more single event faults. A reconfigure request is made to SOC bus arbiter 208. SOC multiplexer 312 selects affected logic device(s) for SOC bus arbiter 208 to access from voter logic interface 218.

Error filter counter 316 tracks each single event fault error detected, and stops incrementing (decrementing) when a maximum (minimum) counter value is reached. Once error filter counter 316 exceeds the programmable error threshold value of error threshold comparator 309, system controller 110 is notified that a substantial number of single event fault conditions have occurred sequentially (i.e., exceeded the programmable error threshold value over a series of consecutive clock cycles). Until then, periodic SET errors that do not affect normal operation of logic devices 104_{A} to 104_{C} will pass through error threshold comparator 309. Error filter counter 316 allows error threshold comparator 309 to distinguish between SETs and a hard failure of at least one of logic devices 104_{A} to 104_{C}. Cumulative error counter 318 provides statistics on the SEU or SEFI rate of the interface (e.g., over the life of a space mission). Cumulative error counter 318 does not determine a faulty logic device 104.

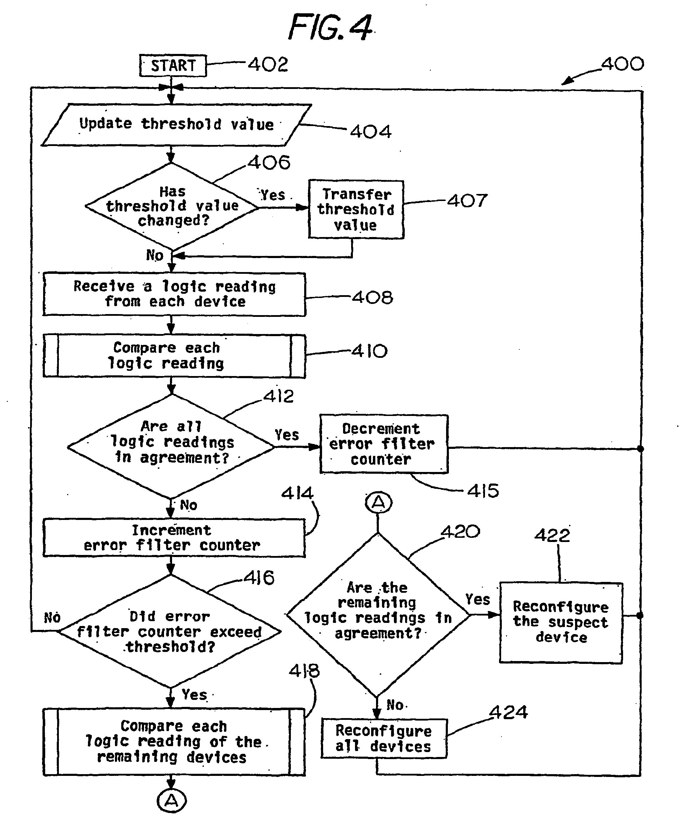

Figure 4 is a flow diagram illustrating a method 400 for tolerating a single event fault in an electronic circuit, in accordance with a preferred embodiment of the present invention. The method of Figure 4 starts at step 402. In this example embodiment, a programmable error threshold value is established (or updated) for error filter counter 316 (step 404). Method 400 then begins the process of monitoring one or more logic readings from logic devices 104_{A} to 104_{C} for possible corruption due to an occurrence of a single event fault. A primary function of method 400 is to update error filter counter 316 every clock cycle based on a current state of each logic reading from logic devices 104_{A} to 104_{C}. Method 400 allows periodic SET errors to pass through error threshold comparator 309 without affecting normal operation of system 100. Each of logic devices 104_{A} to 104_{C} will remain substantially functional, with minimal downtime, while fault detection processor assembly 102 maintains a desired fault tolerance level.

At step 406, system controller 110 determines whether the programmable error threshold value for error filter counter 316 has changed from a previous or default level. If the threshold value changed, a current programmable error threshold level is transferred from system controller 110 (step 407). If the programmable error threshold level did not change, or the programmable error threshold level is fixed at a predetermined level, TMR voter logic 202 receives a logic reading from each of logic devices 104_{A} to 104_{C} (step 408). Each of the three or more logic readings received is compared with at least two other logic readings at step 410. At step 412, TMR/DMR word voter 308 determines whether all of the three or more logic readings are in agreement. Determining whether all of the three or more logic readings are in agreement involves determining which of logic devices 104_{A} to 104_{C} changed state. Any of logic devices 104_{A} to 104_{C} that change state are considered a suspect device.

When all of the three or more logic readings are in agreement, error filter counter 316 is decremented by one at step 415, and method 400 returns to step 404. When one of the three logic readings is not in agreement with the at least remaining two, a single event fault has been detected. Error filter counter 316 is incremented by one at step 414 to indicate that at least one additional single event fault has occurred. Error threshold comparator 309 indicates to system controller 110 when error filter counter 316 exceeds the threshold level (step 416). If the threshold level is not exceeded, method 400 returns to step 404.

At this point, a combination of remaining logic devices 104_{A} to 104_{C} compensates for the one of the three or more logic readings not in agreement. At step 418, TMR/DMR word voter 308 compares each logic reading of the at least remaining two remaining logic devices 104_{A} to 104_{C} with each another. If TMR/DNM word voter 308 determines that the at least two remaining logic readings are in agreement with each another (step 420), the suspect device that was determined not to be in agreement with the at least two remaining of logic devices 104_{A} to 104_{C} is automatically reconfigured at step 422. Otherwise, each of logic devices 104_{A} to 104_{C} is automatically reconfigured at step 424. Reaching step 424 indicates to system 100 that a fatal or SCP error has occurred. Method 400 returns to step 404 once the suspect device is automatically reconfigured in step 422, or once each of logic devices 104_{A} to 104_{C} are automatically reconfigured at step 424.

The description of the present invention has been presented for purposes of illustration and description, and is not intended to be exhaustive or limited to the invention in the form disclosed. Variations and modifications may occur, which fall within the scope of the present invention, as set forth in the following claims.

## Claims

1. A system (100) for tolerating a single event fault in an electronic circuit (102), comprising:
a main processor (110);
a fault detection processor (106) responsive to the main processor, the fault detection processor further comprising a voter logic circuit (202);
three or more field-programmable logic devices (104_{A}, ..., 104_{C}) responsive to the fault detection processor (106), each output of the three or more field-programmable logic devices (104_{A}, ..., 104_{C}) passing through the voter logic circuit (202); and
a programmable error filter including an error filter counter (316), wherein an output of the voter logic circuit (202) is coupled to the programmable error filter, wherein when the three or more field-programmable logic devices are in agreement the error filter counter is decremented and when the three or more field-programmable logic devices are not in agreement the error filter counter is incremented, wherein the programmable error filter determines whether an error count corresponding to a number of times the three or more field-programmable logic devices have not been in agreement has exceeded a programmable error threshold (309), and if the error count exceeds the programmable error threshold (309), the programmable error filter (316) indicates to the main processor (110) a predetermined threshold occurrence of sequential single event fault conditions such that the fault detection processor initiates a reconfiguration of one or all of the three or more field-programmable logic devices by transferring at least one set of default configuration software machine-coded instructions from the fault detection processor to one or all of the three or more field-programmable logic devices.

2. The system (100) of claim 1, wherein the main processor (110) is one of a microcontroller and a programmable logic device.

3. The system (100) of claim 1, wherein the fault detection processor (106) is one of an application-specific integrated circuit, a microcontroller, and a programmable logic device.

4. The system (100) of claim 1, wherein the three or more field-programmable logic devices (104_{A}, ..., 104_{C}) comprise at least one of a field-programmable gate array, and a field-programmable object array.

5. The system (100) of claim 1, wherein the main processor is configured to initiate a resynchronization of the three or more field-programmable logic devices (104_{A}, ..., 104_{C}) after the reconfiguration of the one or all of the three or more field-programmable logic devices.

## Patentansprüche

1. System (100) zum Tolerieren eines Einzelereignisfehlers in einer elektronischen Schaltung (102), umfassend:
einen Hauptprozessor (110);
einen auf den Hauptprozessor reagierenden Fehlerdetektionsprozessor (106), wobei der Fehlerdetektionsprozessor ferner eine Voter-Logikschaltung (202) umfasst;
drei oder mehr am Einsatzort programmierbare Logikeinrichtungen (104_{A}, ..., 104_{C}), die auf den Fehlerdetektionsprozessor (106) reagieren, wobei jede Ausgabe der drei oder mehr am Einsatzort programmierbaren Logikeinrichtungen (104_{A}, ..., 104_{C}) die Voter-Logikschaltung (202) durchläuft; und
ein programmierbares Fehlerfilter, das einen Fehlerfilterzähler (316) umfasst, wobei ein Ausgang der Voter-Logikschaltung (202) mit dem programmierbaren Fehlerfilter gekoppelt ist, wobei, wenn die drei oder mehr am Einsatzort programmierbaren Logikeinrichtungen miteinander übereinstimmen, der Fehlerfilterzähler dekrementiert wird und wenn die drei oder mehr am Einsatzort programmierbaren Logikeinrichtungen nicht miteinander übereinstimmen, der Fehlerfilterzähler inkrementiert wird, wobei der programmierbare Fehlerfilter bestimmt, ob ein Fehlerzählwert, der einer Anzahl von Malen entspricht, wie oft die drei oder mehr am Einsatzort programmierbaren Logikeinrichtungen nicht miteinander übereingestimmt haben, eine programmierbare Fehlerschwelle (309) überschritten hat und wenn der Fehlerzählwert die programmierbare Fehlerschwelle (309) überschreitet, das programmierbare Fehlerfilter (316) dem Hauptprozessor (110) ein Vorbestimmtes Schwellenauftreten von sequentiellen Einzelereignis-Fehlerzuständen angibt, so dass der Fehlerdetektionsprozessor eine Umkonfiguration einer oder aller der drei oder mehr am Einsatzort programmierbaren Logikeinrichtungen einleitet, indem er mindestens eine Menge von maschinencodierten Anweisungen von Vorgabe-Konfigurationssoftware aus dem Fehlerdetektionsprozessor zu einer oder allen der drei oder mehr am Einsatzort programmierbaren Logikeinrichtungen transferiert.

2. System (100) nach Anspruch 1, wobei der Hauptprozessor (110) ein Mikrocontroller oder eine programmierbare Logikeinrichtung ist.

3. System (100) nach Anspruch 1, wobei der Fehlerdetektionsprozessor (106) eine anwendungspezifische integrierte Schaltung oder ein Mikrocontroller oder eine programmierbare Logikeinrichtung ist.

4. System (100) nach Anspruch 1, wobei die drei oder mehr am Einsatzort programmierbaren Logikeinrichtungen (104_{A}, ..., 104_{C}) ein am Einsatzort programmierbares Gatearray und/oder ein am Einsatzort programmierbares Objektarray umfassen.

5. System (100) nach Anspruch 1, wobei der Hauptprozessor dafür ausgelegt ist, eine Neusynchronisation der drei oder mehr am Einsatzort programmierbaren Logikeinrichtungen (104_{A}, ..., 104_{C}) nach der Umkonfiguration der einen oder allen der drei oder mehr am Einsatzort programmierbaren Logikeinrichtungen einzuleiten.

## Revendications

1. Système (100) destiné à tolérer une défaillance due à un événement singulier dans un circuit électronique (102), le système (100) comprenant :
un processeur principal (110) ;
un processeur de détection de défaillance (106) réagissant au processeur principal, le processeur de détection de défaillance comprenant en outre un circuit logique électeur (202) ;
trois dispositifs logiques programmables par l'utilisateur (104_{A}, ..., 104_{C}) ou plus réagissant au processeur de détection de défaillance (106), chaque sortie des trois dispositifs logiques programmables par l'utilisateur (104_{A}, ..., 104_{C}) ou plus passant par le circuit logique électeur (202) ; et
un filtre d'erreurs programmable comportant un compteur (316) de filtre d'erreurs ; une sortie du circuit logique électeur (202) étant reliée au filtre d'erreurs programmable ; en cas de concordance entre les trois dispositifs logiques programmables par l'utilisateur ou plus, le compteur de filtre d'erreurs étant décrémenté et en cas de non-concordance entre les trois dispositifs logiques programmables par l'utilisateur ou plus, le compteur de filtre d'erreurs étant incrémenté ; le filtre d'erreurs programmable établissant si un compte d'erreurs correspondant à un nombre de fois où il n'y a pas eu concordance entre les trois dispositifs logiques programmables par l'utilisateur ou plus a dépassé un seuil d'erreurs programmable (309), et si le compte d'erreurs dépasse le seuil d'erreurs programmable (309), le filtre d'erreurs programmable (316) indiquant au processeur principal (110) une occurrence de seuil prédéfinie de conditions successives de défaillance due à un événement singulier de manière à ce que le processeur de détection de défaillance déclenche une reconfiguration d'un ou de la totalité des trois dispositifs logiques programmables par l'utilisateur ou plus par transfert d'au moins un ensemble d'instructions logicielles de configuration par défaut à codage machine du processeur de détection de défaillance à un ou à la totalité des trois dispositifs logiques programmables par l'utilisateur ou plus.

2. Système (100) selon la revendication 1, le processeur principal (110) étant un microcontrôleur ou un dispositif logique programmable.

3. Système (100) selon la revendication 1, le processeur de détection de défaillance (106) étant un circuit intégré à application spécifique ou un microcontrôleur ou un dispositif logique programmable.

4. Système (100) selon la revendication 1, les trois dispositifs logiques programmables par l'utilisateur (104_{A}, ..., 104_{C}) ou plus comprenant un réseau de portes programmable par l'utilisateur et/ou un réseau d'objets programmable par l'utilisateur.

5. Système (100) selon la revendication 1, le processeur principal étant conçu pour déclencher une resynchronisation des trois dispositifs logiques programmables par l'utilisateur (104_{A}, ..., 104_{C}) ou plus suite à la reconfiguration dudit un ou de la totalité des trois dispositifs logiques programmables par l'utilisateur ou plus.
